# EUROPÄISCHE PATENTANMELDUNG

(11) **EP 2 040 062 A1**
(43) Veröffentlichungstag der Anmeldung: **25.03.2009**
(21) Anmeldenummer: 07018302.5
(22) Anmeldetag: 18.09.2007
(51) Int. Cl.: G01N 21/954, F01D 21/00

(54) **Inspektion von Hochtemperaturkammern**

(71) Anmelder: SIEMENS AKTIENGESELLSCHAFT, 80333 München (DE)
(72) Erfinder: Hannott, Kerstin, 46045 Oberhausen (DE); Scheidtmann, Wilhelm, 58644 Iserlohn (DE); Tenrahm, Thomas-Dieter, 46535 Dinslaken (DE); Trenaman, Dirk, 47506 Neukirchen-Vluyn (DE)

(57) **Zusammenfassung**

Die Erfindung betrifft ein Verfahren und eine Vorrichtung zur Inspektion einer Hochtemperaturkammer wobei ein Videoskop mit einer Manövriervorrichtung (32) versehen wird und das Videoskop mit der Manövriervorrichtung zumindest teilweise über einen in der Hochtemperaturkammer vorhandenen Flammwächter (35) in die Hochtemperaturkammer eingebracht wird.

## Beschreibung

Die Erfindung betrifft ein Verfahren sowie eine Vorrichtung zur Inspektion einer Hochtemperaturkammer, wie sie zum Beispiel in einer Gasturbine eingesetzt wird.

Eine Gasturbinenanlage umfasst z.B. einen Verdichter, eine Brennkammer und eine Turbine. Im Verdichter erfolgt ein Verdichten von angesaugter Luft, welcher anschließend ein Brennstoff beigemischt wird. In der Brennkammer wird das Gemisch verbrannt, wobei die Verbrennungsabgase der Turbine zugeführt werden. Von der Turbine wird den Verbrennungsabgasen thermische Energie entzogen und in mechanische Energie umgesetzt.

Aufgrund der in Heißgaskanälen oder anderen Heißgasräumen wie beispielsweise der Brennkammer herrschenden hohen Temperaturen ist es erforderlich, die Innenwandung eines Heißgaskanals bestmöglichst temperaturresistent zu gestalten. Hierzu bieten sich hochwarmfeste Werkstoffe, wie z. B. Keramiken an. Durch die Belastung in der Brennkammer bzw. den Heißgaskanälen können jedoch Risse in den Hitzeschilden auftreten, welche schließlich zu einer Ablösung des Hitzeschilds von der Innenwandung führen. Dies kann zu großen Schäden an der Gasturbine führen welche mit hohen Ausfallzeiten und enormen Kosten einhergehen.

Die Brennkammer einer Gasturbine muss daher in regelmäßigen Abständen gewartet werden, um die in der Brennkammer vorhandenen Hitzeschilde zu inspizieren. Eine solche Inspektion erfolgt beispielsweise auch nach Beschleunigungsereignissen.

Dazu werden vorhanden Brennkammer-Mannlöcher nach Abkühlen der Gasturbine geöffnet und eine visuelle Inspektion der Brennkammer insbesondere der Hitzeschilde wird vorgenommen, wobei eine hinreichende Abkühlung der Gasturbine nach 24 Stunden nach der Abschaltung erfolgt. Der Weiterbetrieb der Gasturbine erfolgt im Anschluss an die Kontrolle. Danach werden die Mannlöcher wieder geschlossen.

Die DE 199 24 607 A1 betrifft eine ferngesteuerte Inspektionseinrichtung für die Ringbrennkammer einer Gasturbine. Die Inspektion erfolgt mittels einer Videokamera die über ein Mannloch in die Gasturbine eingeführt wird und von dort ferngesteuert wird.

Die DE 39 14099C1 betrifft eine Vorrichtung zur Führung und Fixierung eines Endoskops bei der Inspektion von schwer zugänglichen Stellen in Geräten wie beispielsweise zur Inspektion von Flugzeugtriebwerken. Das Endoskop wird an hierfür bestimmte Inspektionsvorrichtungen eingeführt.

Die DE 44 38 229 C2 offenbart eine Einrichtung zur Videodiagnostik von Druckvergasungsreaktoren unter vollen Betriebsbedingungen. Dazu wird ein Endoskop mittels eines druckfesten Endoskopschutzrohres gekapselt. Das Endoskop ist anschließend durch einen Gehäuseteil in den Hohlraum verfahrbar.

Die US 5,164,826 offenbart ebenfalls eine Methode zur visuellen Inspektion von Heißgaskanälen beispielsweise Dampfturbinen.

Die für eine solche Kontrolle notwendige Stillstandszeit beträgt somit mindestens 24 Stunden meist jedoch 48 Stunden. Dies bedeutet hohe Kosten durch Ausfall der Gasturbine.

Die Aufgabe der Erfindung ist daher die Angabe eines Verfahrens zur Reduzierung der Stillstandzeiten bei Wartung von Heißgaskanälen, insbesondere Brennkammern. Das Verfahren soll in Brennkammern für Gasturbinen einsetzbar sein. Eine weitere Aufgabe ist die Angabe einer Vorrichtung welche sich insbesondere zur Durchführung des oben genannten Verfahrens eignet.

Die auf das Verfahren bezogene Aufgabe wird erfindungsgemäß gelöst durch die Angabe eines Verfahrens zur Inspektion einer Hochtemperaturkammer umfassend folgenden Schritten
- ein Videoskop wird mit einer Manövriervorrichtung versehen und
- das Videoskop mit der Manövriervorrichtung wird zumindest teilweise über einen in der Hochtemperaturkammer vorhandenen Flammwächter in die Hochtemperaturkammer eingebracht.

Die Erfindung geht von der Erkenntnis aus, dass beim Öffnen der Mannlöcher die Hochtemperaturkammer wesentlich herabgekühlt sein muss, also mindestens 24 Stunden. Erfindungsgemäß ist erkannt worden, dass Flammenwächter einen schnellen Zugang zur Hochtemperaturbrennkammer erlauben. Ein Videoskop wird daher mit einer Manövriervorrichtung versehen und zumindest teilweise über einen in der Hochtemperaturkammer vorhandenen Flammwächter in die Hochtemperaturkammer eingebracht. Das Videoskop mit der Manövriervorrichtung wird dabei nach dem Öffnen der Flammenwächterports in die Brennkammer eingebracht. Das Öffnen und Schließen der Flammenwächter ist in Summe wesentlich geringer als das Öffnen und Schließen der Mannlöcher. Die Montage und die Demotage vorhandener Mannlöcher sowie die dafür benötigten Abkühlzeiten entfallen damit. Mittels der Manövriervorrichtung und dem Videoskop ist die Brennkammer dabei so gut einsehbar, dass beispielsweise alle Hitzeschilde sowie vorhandenen Schäden in den Hitzeschilden nach z.B. Beschleunigungsvorgängen detektiert werden können. Mit Hilfe der Erfindung kann somit die Stillstandzeit einer Hochtemperaturbrennkammer bei einer notwendigen Inspektion enorm reduziert werden. Eine Reduktion auf bis zu 1 / 4 des ursprünglichen Ausgangswertes ist damit möglich.

In bevorzugter Ausgestaltung wird der Flammenwächter mittels einer Schleuse gegen Heißgasaustritt geschützt. Diese schützt den Inspekteur gegen austretendes Heißgas und dient somit einer zusätzlichen Sicherheitsvorkehrung, da in der Brennkammer zum Zeitpunkt der Öffnung unter normalen Umständen Unterdruck herrscht und somit kein Heißgasaustritt zu erwarten ist. Diese Schleuse ist bevorzugt eine Schiebeplatte welche eine Zuführung für das Videoskop und die Manövriervorrichtung aufweist. Die Schleuse besteht dabei bevorzugt aus Metall oder metallischem Material. Bevorzugt ist die Schleuse eine Schiebeplatte, welche eine Zuführung für das Videoskop und die Manövriervorrichtung aufweist. Damit ist eine besonders einfache Realisierung der Schleuse möglich.

In bevorzugter Ausgestaltung wird als Videoskops ein hitzebeständiges Videoskops verwendet. Damit kann die Einsatztemperatur wesentlich erhöht werden, was zu einer weiteren Reduzierung der Stillstandzeiten führt. Bevorzugt sind die Manövriervorrichtung und /oder das Videoskop luftgekühlt. Durch die Luftkühlung ist eine Einsatztemperatur bis zu 150°C möglich. Damit reduziert sich beispielsweise die Abkühlzeit auf unter 8h. Mit dem Öffnen der Flammenwächter und der Inspektion der Brennkammer ist somit eine Reduktion auf 10-12 Stunden Stillstandszeit möglich

Bevorzugt wird Manövriervorrichtung ein Schutzrohr mit Pressluftsteuerung verwendet. Hier kann beispielsweise eine Flying Probe zum Einsatz kommen.

Die auf die Vorrichtung bezogene Aufgabe wird gelöst durch die Angabe einer Vorrichtung zur Inspektion einer Hochtemperaturkammer umfassend einem Videoskop, welches mit einer Manövriervorrichtung versehen ist und wobei das Videoskop mit der Manövriervorrichtung zumindest teilweise über einen in der Hochtemperaturkammer vorhandenen Flammwächter in die Hochtemperaturkammer einbringbar ist.

Bevorzugt ist die Manövriervorrichtung semi-flexible. Damit ist das Einbringen in entsprechende Zugänge gewährleistet. Weiterhin vorteilhaft ist, dass dies eine einfache Inspektion der gesamten Hochtemperaturbrennkammer erlaubt.

Bevorzugt weist die Manövriervorrichtung und/oder das Videoskop ein integriertes Seilsystem oder/und Pressluftsystem oder/und Hydrauliksystem auf. Damit ergibt sich eine besonders einfache Handhabung des Systems Videoskop mit Manövriervorrichtung.

Bevorzugt umfasst die Manövriervorrichtung ein Schienen- und/oder Seilsystem. Dieses wird durch die entsprechenden Zugänge eingebracht. Hierbei wird auf dem gesamten Umfang eine entsprechende Führung möglich, die eine Bewegung des Videoskops unter Schwerkrafteinfluss ermöglicht.

In bevorzugter Ausgestaltung ist die Manövriervorrichtung ein in zwei Achsen manipulierbares Führungsrohr. In dessen Kopfbereich wird der Videoskop eingesetzt. Somit ist eine einfache Bewegung des Videoskops in der Hochtemperaturkammer und damit eine umfassende Inspektion möglich. Weiterhin kann am Ende des Führungsrohrs ein klappbares System angebracht sein, welches z.B. bei dem Einsatz in der Hochtemperaturkammer einer Gasturbine verhindert, dass Teile in den Schaufelpfad gelangen.

Nachfolgend wird die vorliegende Erfindung unter Bezugnahme auf die Zeichnung genauer beschrieben. Darin zeigen
- FIG 1: eine Gasturbine und

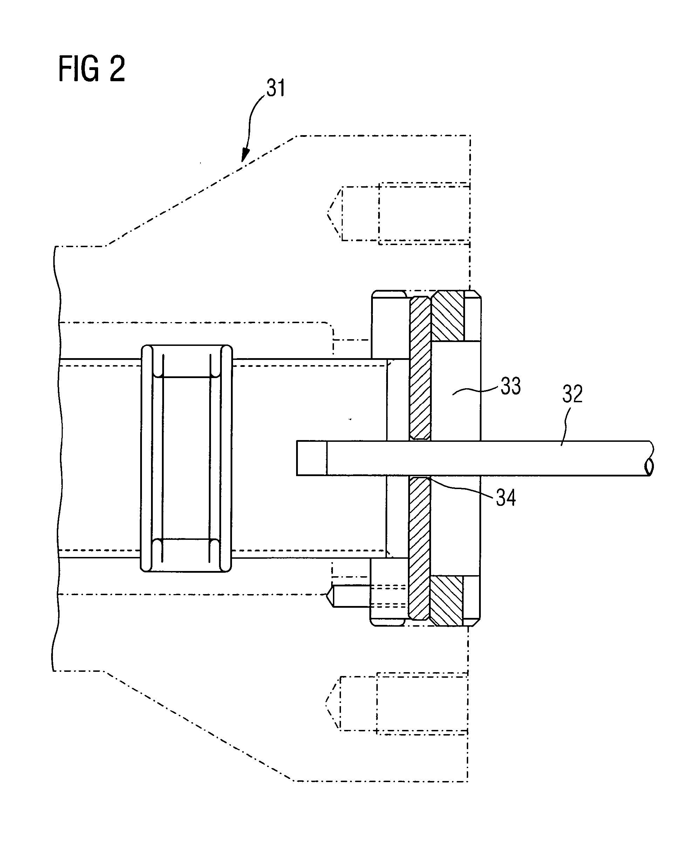

- FIG 2: einen Flammenwächter mit erfindungsgemäßen Videoskop mit einer Manövriervorrichtung.

Gleiche Teile sind in allen Figuren mit denselben Bezugszeichen versehen.

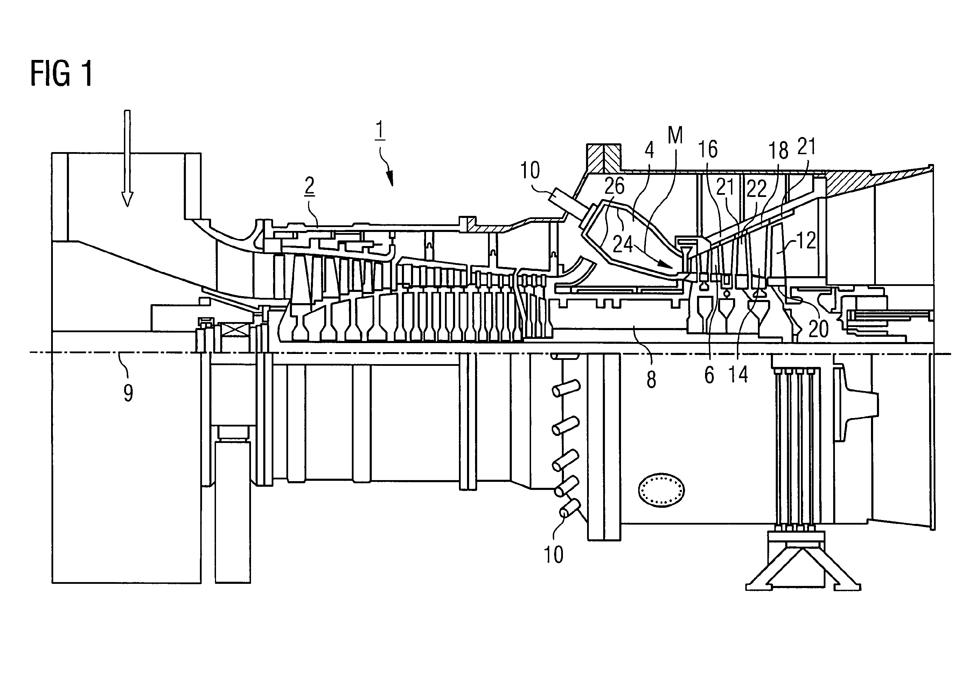

Die Gasturbine 1 gemäß Figur 1 weist einen Verdichter 2 für Verbrennungsluft, eine Brennkammer 4, sowie eine Turbine 6 zum Antrieb des Verdichters 2 und eines nicht näher dargestellten Generators und einer Arbeitsmaschine auf. Dazu sind die Turbine 6 und der Verdichter 2 auf einer gemeinsamen, auch als Turbinenläufer bezeichneten Turbinenwelle angeordnet, mit der auch der Generator bzw. die Arbeitsmaschine verbunden ist, und die um ihre Mittelachse drehbar gelagert ist. Die in der Art einer Ringbrennkammer ausgeführte Brennkammer 4 ist mit einer Anzahl von Brennern zur Verbrennung eines flüssigen oder gasförmigen Brennstoffs bestückt. Die Turbine 6 weist eine Anzahl von mit der Turbinenwelle 8 verbundenen, rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfasst die Turbine 6 eine Anzahl von feststehenden Leitschaufeln 14, die ebenfalls kranzförmig unter der Bildung von Leitschaufelnreihen an einem Innengehäuse 16 der Turbinen befestigt sind. Die Laufschaufeln 12 dienen dabei zum Antrieb der Turbinenwelle durch Impulsübertrag vom die Turbine 6 durchströmenden heißen Mediums, dem Arbeitsmedium M. Die Leitschaufeln 14 dienen hingegen zur Strömungsführung des Arbeitsmediums M zwischen jeweils zwei in Strömungsrichtung des Arbeitsmediums M, z. B. dem Heißgas, gesehenen aufeinanderfolgenden Laufschaufelreihen oder Laufschaufelkränzen. Ein aufeinanderfolgendes Paar aus einem Kranz von Leitschaufeln 14 oder einer Leitschaufelreihe und aus einem Kranz Laufschaufeln 12 oder einer Laufschaufelreihe wird dabei auch als Turbinenstufe bezeichnet.

Jede Leitschaufel 14 weist eine auch als Schaufelfuß bezeichnete Plattform 18 auf, die zur Fixierung der jeweiligen Leitschaufel 14 am Innengehäuse der Turbine 6 als Wandelement angeordnet ist. Die Plattform 18 ist dabei ein thermisch vergleichsweise stark belastetes Bauteil, das die äußere Begrenzung eines Heißgaskanals für das die Turbine 6 durchströmende Arbeitsmedium M bildet. Jede Laufschaufel 12 ist in analoger Weise über eine auch als Schaufelfuß bezeichnete Plattform 20 an der Turbinenwelle 8 befestigt.

Zwischen beabstandet voneinander angeordneten Plattformen 18 der Leitschaufel 14 zwei benachbarter Leitschaufelreihen ist jeweils ein Führungsring 21 am Innengehäuse 16 der Turbine 6 angeordnet. Die äußere Oberfläche jedes Führungsrings 21 ist dabei ebenfalls dem heißen, die Turbine 6 durchströmenden Arbeitsmedium M ausgesetzt und in radialer Richtung vom äußeren Ende der ihm gegenüberliegenden Laufschaufel 12 durch einen Spalt beabstandet. Die zwischen benachbarten Leitschaufelreihen angeordneten Führungsringe 21 dienen dabei insbesondere als Abdeckelemente, die die Innenwand 16 oder andere Gehäuse - Einboardteile - vor einer thermischen Überbeanspruchung durch das die Turbine 6 durchströmende heiße Arbeitsmedium M schützt. Die Brennkammer 4 ist von einem Brennkammergehäuse 29 begrenzt, wobei brennkammerseitig eine Brennkammerwand 24 gebildet ist. Im Ausführungsbeispiel ist die Brennkammer 4 als so genannte Ringbrennkammer ausgestaltet, bei der eine Vielzahl von in Umfangsrichtung um die Turbinenwelle 8 herum angeordneten Brennern 10 in einem gemeinsamen Brennkammerraum münden. Dazu ist die Brennkammer 4 in ihrer Gesamtheit als ringförmige Struktur ausgestaltet, die um die Turbinenwelle 8 herum positioniert ist.

Der Flammenwächter 35 oder auch als Flammenfühler bezeichnet hat die Funktion, die Ausbildung der Flamme sowie eine geordnete und kontinuierliche Verbrennung zu überwachen. Die Flammenwächter 35 sind zu diesem Zweck mittels eines Flammenwächterstutzen 1 an der Brennkammer 4 befestigt. Die Flammenwächter 35 sind beispielsweise am Umfang der Brennkammer 4 angeordnet um die gesamte Flamme einzusehen. Mittels dieses Flammenwächters 35 ist nun eine einfache Inspektion der Brennkammer 4 möglich. Das Videoskop mit der Manövriervorrichtung 33 wird nach dem Öffnen und Schließen der Flammenwächterports in die Brennkammer eingebracht. Durch die Luftkühlung des hitzbeständigen Videoskops kann eine Einsatztemperatur bis zu 150 °C erreicht werden. Am Zugang ist eine Schleuse 33 gegen Heißgasaustritt vorgesehen. Diese kann aus Metall oder metallischen Material sein und eine Zuführung 34 für das Videoskop mit der Manövriervorrichtung 33 beinhalten. Als Manövriervorrichtung kann ein in zwei Achsen manipulierbares und gekühltes Führungsrohr mit Abwinkelfunktion eingesetzt werden. Das Videoskop ist hierbei im Kopfbereich eingesetzt. Am Ende des Führungsrohrs kann ein klappbares System angebracht sein, welches verhindert, dass das Führungsrohr in den Schaufelpfad gelangt. Das Führungsrohr ist semi-flexibel ausgestaltet. Somit erlaubt es ein Einbringen in die entsprechenden Zugänge bzw. in einzelne Brennkammerabschnitte. Weiterhin ist eine Inspektion der gesamten Brennkammer 4 möglich. Die Manövrierbarkeit des Führungsrohres ist dabei beispielsweise durch ein integrierte Seilsystem/ Pressluftsystem oder eine Hydraulik erreichbar. Weiterhin kann als Manövriervorrichtung auch ein Flying Probe verwendet werden. Alternativ ist ein einbringen eines Schienen-/Seilsystems durch die entsprechenden Zugänge möglich, die eine Bewegung des Videoskops unter Schwerkrafteinfluss ermöglichen.

Mit der Erfindung ist es möglich eine Inspektion einer Hochtemperaturkammer enorm zu reduzieren. Die Stillstandszeiten bei einer üblichen Inspektion dauern mit Montage/Demontage der Mannlöcher ca. 48 Stunden. Das Öffnen und Schließen der Flammenwächterports dauert demgegenüber ca. eine Stunde. Erfindungsgemäß entfallen hier Demontage und Montage der Mannlochdeckel. Durch die Luftkühlung des Videoskops mit der Manövriervorrichtung kann eine Einsatztemperatur von 150°C erreicht werden. Damit reduziert sich die Abkühldauer auf bis unter 8 Stunden. Damit ist eine Stillstandzeit auf 1 / 4 des ursprünglichen Wertes möglich. Durch die Ausgestaltung des Videoskops mit Manövriervorrichtung ist die gesamte Brennkammer einsehbar. Hitzeschilde können so in kurzer Zeit z.B. nach Beschleunigungsvorgängen auf Schäden überprüft werden.

## Patentansprüche

**1.** Verfahren zur Inspektion einer Hochtemperaturkammer umfassend folgender Schritte
- ein Videoskops wird mit einer Manövriervorrichtung (32) versehen und
- das Videoskop mit der Manövriervorrichtung wird zumindest teilweise über eine in der Hochtemperaturkammer vorhandenen Flammwächter (35) in die Hochtemperaturkammer eingebracht.

**2.** Verfahren nach Anspruch 1,
**dadurch gekennzeichnet, dass** der Flammenwächter (35) mittels einer Schleuse (33) gegen Heißgasaustritt geschützt wird.

**3.** Verfahren nach einem der vorhergehenden Ansprüche,
**dadurch gekennzeichnet, dass** als Videoskop mit Manövriervorrichtung ein hitzebeständiges Videoskop sowie eine hitzebeständige Manövriervorrichtung verwendet wird.

**5.** Verfahren nach einem der vorhergehenden Ansprüche,
**dadurch gekennzeichnet, dass** die Manövriervorrichtung und /oder das Videoskop luftgekühlt sind.

**6.** Verfahren nach einem der vorhergehenden Ansprüche,
**dadurch gekennzeichnet, dass** als Manövriervorrichtung ein Schutzrohr mit Pressluftsteuerung verwendet wird.

**7.** Gasturbine mit einem Verfahren nach einer der Ansprüche 0-0.

**8.** Vorrichtung zur Inspektion einer Hochtemperaturkammer umfassend einem Videoskop, welches mit einer Manövriervorrichtung versehen ist und wobei das Videoskop mit der Manövriervorrichtung (32) zumindest teilweise über einen in der Hochtemperaturkammer vorhandenen Flammenwächter (35) in die Hochtemperaturkammer einbringbar ist.

**9.** Vorrichtung nach Anspruch 7,
**dadurch gekennzeichnet, dass** am Flammenwächter (35) eine Schleuse (33) vorgesehen ist.

**10.** Vorrichtung nach Anspruch 8
**dadurch gekennzeichnet, dass** die Schleuse (33) aus Metall oder metallischem Material ist.

**11.** Vorrichtung nach einem der Ansprüche 8-9,
**dadurch gekennzeichnet, dass** die Schleuse (33) eine Schiebeplatte ist, welche einen Zuführung (34) für das Videoskop und die Manövriervorrichtung aufweist.

**12.** Vorrichtung nach einem der Ansprüche 7-10,
**dadurch gekennzeichnet, dass** die Manövriervorrichtung und/oder das Videoskop gekühlt ist.

**13.** Vorrichtung nach einem der Ansprüche 7-11,
**dadurch gekennzeichnet, dass** die Manövriervorrichtung und/oder das Videoskop semi-flexible ausgestaltet ist.

**14.** Vorrichtung nach einem der Ansprüche 7-12,
**dadurch gekennzeichnet, dass** die Manövriervorrichtung und/oder das Videoskop ein integriertes Seilsystem oder/und Pressluftsystem oder/und Hydrauliksystem aufweist.

**15.** Vorrichtung nach einem der Ansprüche 7-13,
**dadurch gekennzeichnet, dass** die Manövriervorrichtung ein Schienen- und/oder Seilsystem umfasst.

**16.** Vorrichtung nach einem der Ansprüche 6-13,
**dadurch gekennzeichnet, dass** die Manövriervorrichtung ein in zwei Achsen manipulierbares Führungsrohr ist.

**17.** Gasturbine mit einer Vorrichtung nach einer den Ansprüchen 7-15.
